# EUROPÄISCHE PATENTSCHRIFT

(11) **EP 0 906 145 B1**
(45) Veröffentlichungstag und Bekanntmachung des Hinweises auf die Patenterteilung: **07.08.2002**
(21) Anmeldenummer: 97927083.2
(22) Anmeldetag: 30.05.1997
(51) Int. Cl.: B01D 53/00, B01D 53/94, B01D 53/86

(54) **Vorrichtung und Verfahren zur photokatalytischen Umsetzung von Abgasen einer Brennkraftmaschine**
Apparatus and process for the photocatalytic conversion of combustion engine exhaust gases
Dispositif et procédé pour la transformation photocatalytique de gaz d'échappement d'un moteur à combustion interne

(30) Priorität: 18.06.1996 DE 19624325
(43) Veröffentlichungstag der Anmeldung: 07.04.1999
(73) Patentinhaber: Volkswagen Aktiengesellschaft, 38436 Wolfsburg (DE)
(72) Erfinder: ENGELER, Werner, D-38528 Meine (DE); NEYER, Dieter, D-38444 Wolfsburg (DE)
(86) Internationale Anmeldenummer: EP9702812
(87) Internationale Veröffentlichungsnummer: WO9748476

(56) Entgegenhaltungen:
- EP-A- 0 325 133
- WO-A-96/33135
- DE-A- 2 146 504
- DE-A- 4 240 558
- DE-A- 4 303 272
- JP-A- 6 091 137

## Beschreibung

Die Erfindung betrifft eine Vorrichtung zur katalytischen Umsetzung von Gasen Abgasen einer Brennkraftmaschine dem Oberbegriff des Anspruchs 1 und ein Verfahren gemäß dem Oberbegriff des Anspruchs 11.

Zur Minderung von CO, HC und/oder NOx aus Abgasen von Brennkraftmaschinen kommen bislang hauptsächlich edelmetallbeschichtete Katalysatoren zum Einsatz. Als katalytisch aktive Schicht ist Platin anderen Metallen überlegen, da Platin gegenüber CO und HC bereits bei niedrigen Temperaturen (ab ca. 140 °C) katalytisch aktiv ist. Die katalytische Wirkung des Platins ist über lange Zeit stabil und wird auch bei hohen Abgastemperaturen nicht wesentlich durch Migration des Platins beeinträchtigt. Die primäre Wirkung des Pt-Katalysators, z. B. Pt/Al₂O₃ liegt in der Oxidation von CO und HC zu CO₂ bei gleichzeitiger NOx-Reduktion. Die katalytische Reduktion von NOx ist je nach verwendetem Katalysator verhältnismäßig stark temperaturabhängig und kann ihr Maximum unterhalb 200 °C haben.

Aus der DE 36 42 018 A ist ein Katalysator auf Zeolithbasis bekannt, der die Umsetzung von Stickoxiden mit Kohlenwasserstoffen katalysiert. Die Umsetzung der Stickoxide ist abhängig von der Konzentration an Kohlenwasserstoffen in dem zu behandelnden Abgas, wobei bei einem Verhältnis NOx : HC = 1 eine knapp 50-%ige Reduktion der Stickoxide erfolgt. Ein solcher Zeolithkatalysator läßt sich auch mit den üblichen Edelmetallkatalysatoren (Oxidationskatalysatoren) verbinden.

Problematisch ist bei diesen, insbesondere den thermischen Katalysatoren, daß NOx teils auch zu dem ozonschädigenden Treibhausgas N₂O umgesetzt werden kann.

Eine Erhöhung des NOx-Umsatzes, jedoch keine Vermeidung der N₂O-Bildung läßt sich durch selektive katalytische Reduktion (SCR-Verfahren) mit Ammoniak oder Harnstoff als Reduktionsmittel erreichen. Das SCR-Verfahren eignet sich für den instationären Betrieb nur bedingt, da aufgrund der wechselnden Betriebszustände der Brennkraftmaschine beim Einstellen einer 100-%igen NOx-Reduktionsmittel-Stöchiometrie die Gefahr eines NH₃-Schlupfes besteht. Hinzu kommt, daß beim instationären Betrieb neben dem Kraftstoff auch Ammoniak oder Harnstoff mitgeführt werden muß.

Bei Abgastemperaturen unter 140 °C sind die oben beschriebenen Katalysatoren praktisch inaktiv. Um die Abgasreinigung auch während des Aufheizvorganges zu gewährleisten, wird die Adsorption der Schadstoffkomponenten (beispielsweise an einem Zeolithen) vorgeschlagen. Die adsorbierte Schadstoffgaskomponente aus dem Abgas, wie z. B. NOx, wird bei Abgastemperaturen von ca. 200 °C von der Zeolithoberfläche desorbiert und durch den nachgeschalteten, bei dieser Temperatur aktiven Edelmetallkatalysator umgesetzt. Das Problem ist hier die notwendige Regenerierung der Zeolithoberfläche, die für eine Langzeitstabilität gewährleistet sein muß. Insbesondere mögliche Oberflächenvergiftungen stellen ein Problem für diese Art der Abgasreinigung dar.

Grundsätzlich sind auch photokatalytische Umsetzungen von Gasen bekannt. Hier wird beispielsweise der Photokatalysator in eine Wirbelschicht überführt, die dann von innen und von außen beleuchtet wird. Eine weitere photokatalytische Umsetzung erfolgt in einem transparenten Rohr, das halbseitig mit dem Photokatalysator innenbeschichtet ist, wobei die Bestrahlung durch die nicht beschichtete Seite des Reaktionsrohres erfolgt.

Die EP-A-0.325.133 beschreibt eine Vorrichtung und ein Verfahren zur katalytischen Umsetzung von Gas an einem belichteten Photokatalysator, wobei das Gas durch eine Vielzahl parallel angeordneter Kanäle strömt, auf deren Innenfläche der Katalysator angeordnet ist, und wobei das Licht der Belichtungsquelle über einen Reflektor in der Gasströmungsrichtung in die Kanäle reflektiert wird.

Die JP-A-6.091.137 betrifft ebenfalls eine Vorrichtung und ein Verfahren zur photokatalytischen Umsetzung von Gasen. Die Gase strömen durch ein Vielzahl von parallel in einem Monolith angeordneten Kanäle, wobei das Licht der Belichtungsquellen in und/oder entgegen der Gasströmungsrichtung in die Kanäle reflektiert wird. Mehrere Monolithe sind in Serie geschaltet. Die UV- Lampen sind mit einem Reflektor versehen.

Aufgabe der vorliegenden Erfindung ist es, eine photokatalytische Umsetzung von Gasen so durchzuführen, daß auch verhältnismäßig hohe Abgasströme mit verhältnismäßig einfachen Mitteln umgesetzt werden können. Diese Aufgabe wird bei der eingangs beschriebenen Vorrichtung gelöst mit den Maßnahmen des Anspruchs 1.

Für das Verfahren wird die Aufgabe gelöst mit den Merkmalen des Anspruchs 11.

Die Unteransprüche zeigen bevorzugte Ausgestaltungen.

Mit dem erfindungsgemäßen Verfahren erfolgte die photokatalytische Umsetzung der Gase in einer Vielzahl parallel angeordneter Kanäle, an deren Innenwänden, über die die Gase strömen, der Katalysator liegt. Vorzugsweise sind die Innenwände ringsum katalytisch aktiv.

Erfindungsgemäß wird das Licht für die katalytische Umsetzung über Reflektoren in die Kanäle hineingespiegelt, so daß die Einstrahlrichtung im wesentlichen in und/oder entgegen der Gasströmung durch die Kanäle erfolgt. Durch die Vielzahl der nur an ihren Enden offenen Kanäle wird eine hohe Oberfläche für die katalytische Schicht zur Verfügung gestellt, und durch den Lichteintritt im wesentlichen parallel zu dem Gasstrom bzw. der Längsachse der Kanäle wird erreicht, daß die Innenbeschichtung der Kanäle über eine verhältnismäßig lange Strecke belichtet wird. Dies ist Voraussetzung für eine gute katalytische Aktivität.

Besonders vorteilhaft ist der Reflektor getrennt von der Lichtquelle angeordnet, da hierdurch speziell ausgebildete Reflektoren zum Einsatz kommen können, deren Lichtaustritt auf die Kanalöffnungen (Einlaß bzw. Auslaß) ausgerichtet ist. Auch ein eventuell notwendiger Tausch der Lichtquelle ist so vereinfacht und kostengünstiger. Insbesondere ist es vorteilhaft, wenn mehrere Lichtquellen zum Einsatz kommen, deren Licht mittels eines oder mehrerer Reflektoren in die Kanäle gerichtet wird.

Der Reflektor und/oder die Lichtquelle sind vorteilhaft antihaft-beschichtet. Hierdurch wird erreicht, daß sich insbesondere Rußpartikel nicht so leicht auf ihnen ablagern können. Als verschmutzungshemmende Beschichtung kommen insbesondere Plasmabeschichtungen (z. B. PVD, PVS) zum Einsatz. Als Beschichtung kommen insbesondere diamantähnliche Schichten (DLC), vorteilhaft mit Fluor oder Silizium modifiziert (a-CHF; SICAN), zum Einsatz. Solche Hartstoffschichten haben eine geringe Benetzbarkeit ähnlich der von PTFE.

Vorteilhaft sind benachbarte Kanäle längs ihrer Erstreckung miteinander verbunden, und insbesondere ist die Außenwand eines Kanals ein Teil der Innenwand eines benachbarten Kanals, bzw. einander benachbarte Kanäle haben (oder teilen sich) eine gemeinsame Wandstruktur. Hiermit lassen sich die in der Katalysatortechnik üblichen Monolithen einsetzen, wobei diese aus keramischem Material wie auch aus Metall aufgebaut sein können. Hierdurch werden kostengünstige Fertigungen des Katalysators möglich, da auf die bekannten Trägerstrukturen zurückgegriffen werden kann. Erfindungsgemäß lassen sich auch mehrere Monolithe hintereinander schalten, die dann vorzugsweise einlaß- wie auslaßseitig belichtet werden.

Die erfindungsgemäße photokatalytische Abgasumsetzung kann mit den üblichen bekannten (thermischen) Katalysatoren kombiniert werden, wobei je nach Einsatzzweck die bekannten Katalysatoren vor und nachgeschaltet werden können. Bei Dieselbrennkraftmaschinen wird in einer besonders bevorzugten Ausführungsform der photokatalytischen Abgasreinigung ein Oxidationskatalysator, insbesondere auf Edelmetallbasis, beispielsweise mit Platin, und/oder ein Partikelfilter vorgeschaltet, wobei der Einsatz des Oxidationskatalysators besonders ökonomisch ist. Hierdurch wird erreicht, daß der Abgasstrom vor der Photokatalyse von klebrigen Rußpartikeln befreit wird, so daß die Bestrahlung des Photokatalysators nicht durch Rußpartikel übermäßig beeinträchtigt wird. Es hat sich gezeigt, daß mit Oxidationskatalysatoren bereits ein solcher Abbau, der den Rußpartikelchen anhaftenden Kohlenwasserstoffen erfolgt, so daß die Partikel feiner und weniger klebrig sind, so daß der Lichtaustritt der Strahlungsquelle vom Ruß nicht mehr zugesetzt werden kann.

Mit der Erfindung wird eine Verringerung der Konzentration mindestens einer der Komponenten NOx, HC, CO im Abgas einer Brennkraftmaschine erreicht, wobei die zu verringernden Abgaskomponenten an der in dem Abgasstrom angeordneten Vorrichtung umgesetzt werden. Die Umsetzung erfolgt insbesondere zu den Komponenten N₂, CO₂ und H₂O, wobei die Umsetzung in Gegenwart von Sauerstoff abläuft. Im Unterschied zur thermischen Katalyse wird bei der vorliegenden Erfindung die Photokatalyse eingesetzt, wobei als Katalysator Halbleiter, insbesondere Photohalbleiter zum Einsatz kommen. Die Photoaktivität des Halbleiters gegenüber den Abgaskomponenten wird vorzugsweise erreicht durch Anregung mit einem Licht der Wellenlänge λ ≤ 600 nm und insbesondere ≤ 410 nm (UV-Licht), wobei die Wellenlänge λ vom verwendeten Photohalbleiter abhängig ist. Als Katalysator (katalytisch aktive Substanz) eignen sich für die Erfindung insbesondere Oxide der Übergangsmetalle und/oder der seltenen Erden aber auch beispielsweise Sb₂O₄. Die Metalloxide können in Mischverbindungen vorliegen, beispielsweise als Titanat. Insbesondere geeignet sind TiO₂, ZnO, SrTiO₃, ZrO₂, Sb₂O₄, CeO₂. Der Halbleiter kann auch dotiert sein, beispielsweise mit Metallen der VIII-Hauptgruppe, z. B. Pt, Rh und/oder Ru. Hierdurch wird insbesondere die Oxidationseigenschaft des Katalysators verbessert.

Die Umsetzung erfolgt vorzugsweise in Gegenwart von mindestens 0,5 Vol.-%, insbesondere mindestens 1 Vol.-% O₂, wobei ein zeitweiliges fehlen von Sauerstoff nicht schädlich ist, jedoch zu einer deutlich schlechteren NOx-Umsetzung führt. Die Umsetzung erfolgt also insbesondere in den Abgasen von Dieselbrennkraftmaschinen oder Magermix(Otto)-Motoren. Die Erfindung eignet sich insbesondere beim Einsatz instationärer Brennkraftmaschinen, d. h. bei Brennkraftmaschinen mit stark wechselnden Betriebszuständen wie Drehzahl und Last. Neben NOx wird erfindungsgemäß auch HC und/oder CO umgesetzt, wobei diese Komponenten die NOx-Umsetzung verstärken.

Die vorliegende Erfindung kommt bei der Abgasreinigung von Brennkraftmaschinen zum Einsatz, wobei die Abgasreinigung besonderes vorteilhaft bei Dieselbrennkraftmaschinen bzw. bei Magermix-Otto-Motoren erfolgt. Zudem eignet sich die vorliegende Erfindung für den mobilen (instationären) Einsatz, d.h. insbesondere in Kraftfahrzeugen.

Weitere Ausgestaltungen des Verfahrens sind bei der folgenden Vorrichtung und im Ausführungsbeispiel beschrieben.

Die Erfindung betrifft auch eine Vorrichtung, bei dem die Belichtung im wesentlichen parallel zur photokatalytischen Beschichtung erfolgt. Hierdurch kann, wie beim oben beschriebenen Verfahren, über eine minimale Einstrahlfläche eine große photokatalytische Fläche belichtet werden. Vorzugsweise ist die belichtete Fläche der photokatalytischen Schicht mindestens zehnmal größer als die Einstrahlfläche und insbesondere mindestens zwanzigmal größer. Eine obere Grenze ergibt sich aus der Strahlungsdichte und geometrischen Abweichungen, die nach einer gewissen Kanallänge dazu führen, daß keine genügende Belichtung mehr erfolgt.

Auch die Vorrichtung wird bei der Reinigung von Abgaskomponenten von Brennkraftmaschinen eingesetzt (Abgasentgiftung). Im übrigen enthält die Vorrichtung die oben und beim Verfahren beschriebenen Merkmale.

Die Erfindung wird im folgenden anhand einer Figur eines Ausführungsbeispiels näher beschrieben.

Eine Abgasphotokatalysator Vorrichtung 1 enthält zwei in Serie geschaltete Monolithen 2, 3, von denen der erste Monolith 2 abgaseingangsseitig (Pfeil 4) und der zweite Monolith 3 abgasausgangsseitig (Pfeil 5) angeordnet ist. Die Monolithen 2, 3 sind in üblicher Art in einem nicht dargestellten Gehäuse untergebracht.

Vor, hinter und zwischen den Monolithen 2, 3 ist jeweils eine UV-Lampe 6 bis 8 angeordnet, die auf die Stirnflächen 9 der Monolithen 2, 3 strahlen. Zusätzlich sind Reflektoren 10 bis 14 vorgesehen, die das Licht 15 der UV-Lampen 6 bis 8 in Kanäle 16 der Monolithen 2, 3 spiegeln. Die Kanäle 16 der Monolithen 2, 3 sind mit Titandioxid beschichtet.

Die Kanäle 16 der Monolithen 2, 3 sind wie bei Abgaskatalysatoren üblich in Strömungsrichtung (Pfeile 4, 5) angeordnet und entsprechend sind die Reflektoren 10 bis 13 ringförmig ausgebildet. Der Reflektor 14 ist angeordnet, um den Kernbereich des Monolithen 2 mit Licht zu versorgen. Im Monolithen 3, in dessen Kernbereich die Kanäle 16 keinen geeigneten Lichteinfall haben, sind diese Kanäle geschlossen. Die Endreflektoren 10, 13 sind in ihren von den UV-Lampen 6, 8 entfernten Bereichen stufig ausgebildet, um eine möglichst hohe Lichtdichte in die Kanäle 16 der Monolithen 2, 3 einzuspiegeln.

Die UV-Lampen 6 bis 8 können über Steckvorrichtungen (nicht dargestellt) von außen in das Katalysatorgehäuse eingesetzt werden, ein Austausch der endständigen UV-Lampen 6, 8 kann je nach Konstruktion auch über die Einlaß- bzw. Auslaßöffnungen des Katalysators erfolgen.

Die Reflektoren 10 bis 14 sind vorzugsweise aus verspiegelten Keramiken hergestellt, wobei auch Glaskeramiken zum Einsatz kommen können, die dann vorzugsweise auf der dem Abgasstrom abgewandten Seite verspiegelt sind, so daß die Spiegelflächen vor den Abgasen geschützt sind. Ggf. können die Reflektoren auch mit Glasvorsätzen (bzw. Glaskeramik oder Quarz) vor dem Abgasstrom geschützt werden. Die Abdeckung der Reflektoren kann auch der Optimierung des Strömungsverlaufs des Abgasstroms dienen.

Die Geometrie der Reflektoren, der Anordnung der UV-Lampen wie auch von Einlaß und Auslaß (diese können auch dezentral angeordnet sein) kann auf verschiedenste Weise variiert werden, so daß eine weitgehende parallele Lichteinstrahlung in die Kanäle erfolgt. Hierdurch werden die Innenwände der Kanäle optimal mit dem UV-Licht bestrahlt, so daß die photokatalytische Reaktion stattfinden kann. Durch die weitgehend parallele Lichteinstrahlung wird erreicht, daß das eingestrahlte Licht eine große Innenfläche der Kanäle bestrahlt, und daß das in die Kanäle eingestrahlte Licht zumindest überwiegend, vorzugsweise im wesentlichen auf die photokatalytische Schicht trifft (und nicht den Kanal ohne Wechselwirkung mit der katalytischen Schicht am anderen Ende wieder verläßt).

Die Kanäle haben vorzugsweise eine Querschnittsfläche zwischen 0,5 bis 100 mm² und insbesondere 2 bis 30 mm². Vorteilhaft sind mindestens 10, bevorzugt mindestens 100 und insbesondere mindestens 500 Kanäle vorgesehen. Im übrigen sind die Kanäle im wesentlichen geradlinig ausgebildet, damit über eine möglichst lange Kanalstrecke eine (UV-) Lichteinstrahlung realisiert werden kann.

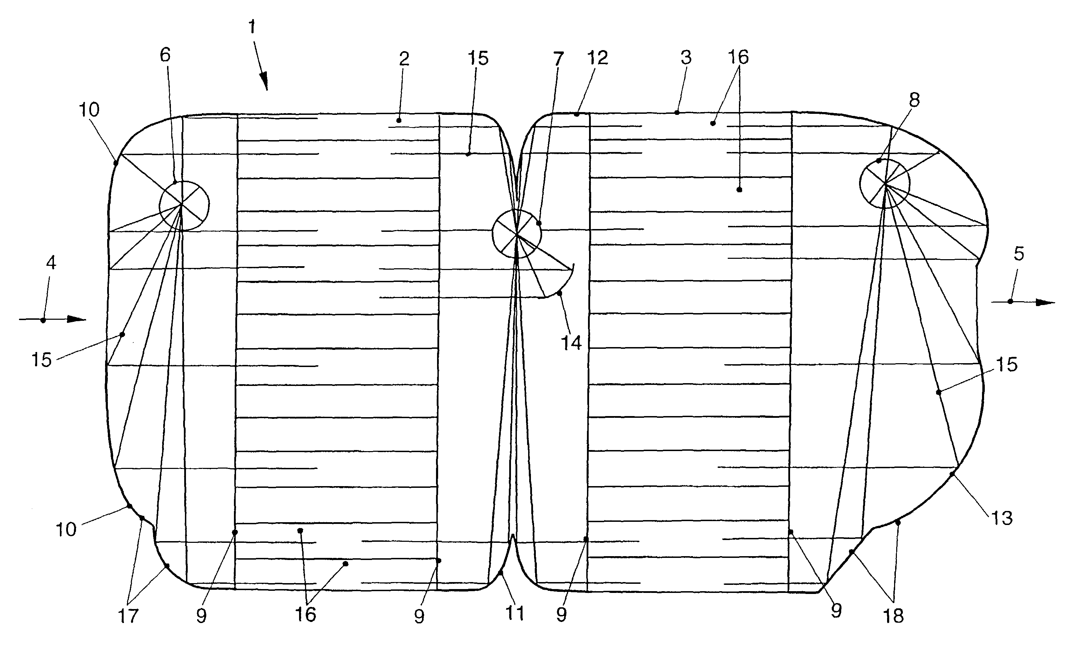

## Patentansprüche

1. Vorrichtung zur katalytischen Umsetzung von Abgasen einer Brennkraftmaschine, insbesondere eines Diesel- oder Magermix-Otto-Motors, an einem Katalysator, **dadurch gekennzeichnet, daß** die Vorrichtung
- mindestens eine Belichtungsquelle (6 - 8) zur Belichtung des Katalysators zur Erzeugung einer photokatalytischen Aktivität des Katalysators,
- eine Vielzahl parallel angeordneter, von den Abgasen durchströmter Kanäle (16), auf deren inneren Oberfläche der Katalysator angeordnet ist, und
- mindestens einem Reflektor (10 - 14) aufweist, wobei die Geometrie des mindestens einen Reflektors (10 - 14) so gewählt ist, daß das Licht der mindestens einen Belichtungsquelle (6 - 8) im wesentlichen parallel zur Gasströmungsrichtung in die Kanäle (16) reflektiert wird, so daß im Abgas enthaltendes NOx, HC und/oder CO durch den belichteten Katalysator umgesetzt werden, insbesondere zu mindestens einem der Produkte N₂, H₂O, CO₂.

2. Vorrichtung nach Anspruch 1, **dadurch gekennzeichnet, daß** die Außenfläche eines Kanals (16) zumindest teilweise die Innenfläche eines benachbarten Kanals (16) bildet.

3. Vorrichtung nach Anspruch 1 oder 2, **dadurch gekennzeichnet, daß** der oder die Reflektoren (10 - 14) trennbar von einer Lichtquelle (6-8) angeordnet werden.

4. Vorrichtung nach einem der vorangegangenen Ansprüche, **dadurch gekennzeichnet, daß** das Licht mehrerer Lichtquellen (6 - 8) mittels Reflektoren (10 - 14) in die Kanäle (16) reflektiert wird.

5. Vorrichtung nach einem der vorhergehenden Ansprüche, **dadurch gekennzeichnet, daß** die Kanäle (16) in einem keramischen oder metallischen Monolith (2, 3) enthalten sind.

6. Vorrichtung nach Anspruch 5, **dadurch gekennzeichnet, daß** mehrere Monolithe (2, 3) in Serie geschaltet sind.

7. Vorrichtung nach einem der vorhergehenden Ansprüche, **dadurch gekennzeichnet, daß** die Kanäle (16) auf ihren Innenwänden ringsum den Katalysator aufweisen.

8. Vorrichtung nach einem der vorhergehenden Ansprüche, **dadurch gekennzeichnet, daß** als Katalysator ein Halbleiter, insbesondere ein Photohalbleiter eingesetzt wird.

9. Vorrichtung nach Anspruch 8, **dadurch gekennzeichnet, daß** als Halbleiter ZnO, TiO₂, SrTiO₃, ZrO₂, Sb₂O₄ und/oder CeO₂ eingesetzt werden.

10. Vorrichtung nach einem der vorhergehenden Ansprüche, **dadurch gekennzeichnet, daß** die belichtete Katalysatorvorrichtung mit einer thermischen Katalysatorvorrichtung in Serie geschaltet wird.

11. Verfahren zur katalytischen Umsetzung von Abgasen einer Brennkraftmaschine, insbesondere eines Diesel- oder Magermix-Otto-Motors, an einem Katalysator, **dadurch gekennzeichnet, daß**
- die Abgase durch eine Vielzahl parallel angeordneter Kanäle (16) strömen, auf deren Innenfläche der Katalysator angeordnet ist,
- das Licht über mindestens einen Reflektor (10 - 14) in und/oder entgegen der Gasströmungsrichtung in die Kanäle (16) zur Erzeugung einer photokatalytischen Aktivität des Katalysators reflektiert wird, wobei die Geometrie des oder der Reflektoren (10 - 14).so gewählt ist, daß eine weitgehend parallele Lichteinstrahlung in die Kanäle (16) bewirkt wird, und
- im Abgas enthaltendes NOx, HC und/oder CO durch den belichteten Katalysator umgesetzt werden, insbesondere zu mindestens einem der Produkte N₂, H₂O, CO₂.

12. Verfahren nach Anspruch 11, **dadurch gekennzeichnet, daß** in den Abgasen Sauerstoff zu mindesten 0,5 Vol.-% enthalten ist.

## Claims

1. Device for the catalytic conversion of exhaust gases from an internal-combustion engine, in particular from a diesel or lean-mix spark-ignition engine, at a catalyst, **characterized in that** the device has
- at least one illumination source (6-8) for illuminating the catalyst so as to generate a photocatalytic activity of the catalyst,
- a multiplicity of passages (16) which are arranged in parallel, through which the exhaust gases flow and on the inner surface of which the catalyst is arranged and
- at least one reflector (10-14), the geometry of the at least one reflector (10-14) being selected in such a way that the light from the at least one illumination source (6-8) is reflected substantially parallel to the direction of gas flow into the passages (16), so that NOx, HC and/or CO contained in the exhaust gas are converted by the illuminated catalyst, in particular to form at least one of the products N₂, H₂O, CO₂.

2. Device according to Claim 1, **characterized in that** the outer surface of a passage (16) at least in part forms the inner surface of an adjacent passage (16).

3. Device according to Claim 1 or 2, **characterized in that** the reflector(s) (10-14) are arranged in such a manner that they can be separated from a light source (6-8).

4. Device according to one of the preceding claims, **characterized in that** the light from a plurality of light sources (6-8) is reflected into the passages (16) by means of reflectors (10-14).

5. Device according to one of the preceding claims, **characterized in that** the passages (16) are contained in a ceramic or metallic monolith (2, 3).

6. Device according to claim 5, **characterized in that** a plurality of monoliths (2, 3) are connected in series.

7. Device according to one of the preceding claims, **characterized in that** the passages (16), on their inner walls, have the catalyst all the way around.

8. Device according to one of the preceding claims, **characterized in that** a semiconductor, in particular a photo semiconductor is used as catalyst.

9. Device according to Claim 8, **characterized in that** ZnO, TiO₂, SrTiO₃, ZrO₂, Sb₂O₄ and/or CeO₂ are used as semiconductors.

10. Device according to one of the preceding claims, **characterized in that** the illuminated catalyst device is connected in series with a thermal catalyst device.

11. Method for the catalytic conversion of exhaust gases from an internal-combustion engine, in particular a diesel engine or a lean-mix spark-ignition engine, at a catalyst, **characterized in that**
- the exhaust gases flow through a multiplicity of passages (16) which are arranged in parallel and on the inner surface of which the catalyst is arranged,
- the light is reflected, by means of at least one reflector (10-14), into and/or opposite to the direction of gas flow, into the passages (16) in order to generate a photocatalytic activity of the catalyst, the geometry of the reflector(s) (10-14) being selected in such a way that substantially parallel radiation of light into the passages (16) is effected, and
- NOx, HC and/or CO contained in the exhaust gas are converted by the illuminated catalyst, in particular to form at least one of the products N₂, H₂O, CO₂.

12. Method according to Claim 11, **characterized in that** the exhaust gases contain at least 0.5% by volume of oxygen.

## Revendications

1. Dispositif en vue de la conversion catalytique de gaz d'échappement d'une machine à combustion interne, en particulier d'un moteur diesel ou d'un moteur Otto à régime mélange maigre sur un catalyseur, **caractérisé en ce que** le dispositif présente
- au moins une source d'exposition lumineuse (6 - 8) destinée à l'exposition lumineuse du catalyseur en vue de la production d'une activité photocatalytique du catalyseur,
- une pluralité de canaux disposés de manière parallèle, traversés par les gaz d'échappement (16), sur la surface interne desquels le catalyseur est disposé, et
- au moins un réflecteur (10 - 14), la géométrie de l'au moins un réflecteur (10 - 14) étant choisie de telle sorte que la lumière de l'au moins une source d'exposition lumineuse (6 - 8) est réfléchie pour l'essentiel parallèlement à la direction d'écoulement des gaz dans les canaux (16), de manière à faire réagir, à travers le catalyseur illuminé, le NOx, les HC et/ou le CO contenus dans le gaz d'échappement, en particulier pour former au moins un des produits N₂, H₂O, CO₂.

2. Dispositif selon la revendication 1, **caractérisé en ce que** la surface externe d'un canal (16) forme au moins partiellement la surface interne d'un canal voisin (16).

3. Dispositif selon la revendication 1 ou 2, **caractérisé en ce que** le ou les réflecteurs (10 - 14) sont disposés de manière à pouvoir être séparés d'une source de lumière (6 - 8).

4. Dispositif selon l'une quelconque des revendications précédentes, **caractérisé en ce que** la lumière de plusieurs sources de lumière (6 - 8) est réfléchie à l'aide des réflecteurs (10 - 14) dans les canaux (16).

5. Dispositif selon l'une quelconque des revendications précédentes, **caractérisé en ce que** les canaux (16) sont contenus dans un monolithe (2,3) céramique ou métallique.

6. Dispositif selon la revendication 5, **caractérisé en ce que** plusieurs monolithes (2, 3) sont raccordés en série.

7. Dispositif selon l'une quelconque des revendications précédentes, **caractérisé en ce que** les canaux (16) présentent le catalyseur à la périphérie sur leurs parois internes.

8. Dispositif selon l'une quelconque des revendications précédentes, **caractérisé en ce que** l'on utilise, en tant que catalyseur, un matériau semi-conducteur, en particulier un matériau photo semi-conducteur.

9. Dispositif selon la revendication 8, **caractérisé en ce que** l'on utilise, en tant que matériau semi-conducteur, ZnO, TiO₂, SrTiO₃, ZrO₂, Sb₂O₄ et/ou CeO₂.

10. Dispositif selon l'une quelconque des revendications précédentes, **caractérisé en ce que** le dispositif de catalyseur exposé à la lumière est raccordé en série à un dispositif de catalyseur thermique.

11. Procédé en vue de la conversion catalytique de gaz d'échappement d'une machine à combustion interne, en particulier d'un moteur diesel ou d'un moteur Otto à régime mélange maigre sur un catalyseur, **caractérisé**
- **en ce que** les gaz d'échappement s'écoulent à travers une pluralité de canaux (16), disposés de manière parallèle, sur la surface interne desquels le catalyseur est disposé,
- **en ce que** la lumière est réfléchie par l'intermédiaire d'au moins un réflecteur (10 - 14) dans la direction d'écoulement des gaz et/ou dans la direction contraire dans les canaux (16), en vue de la production d'une activité photocatalytique du catalyseur, la géométrie du ou des réflecteurs (10 - 14) étant choisie de telle sorte qu'un rayonnement de lumière essentiellement parallèle agisse dans les canaux (16), et
- **en ce que** le NOx, les HC et/ou le CO contenus dans le gaz d'échappement sont convertis par le catalyseur illuminé, en particulier pour former au moins un des produits N₂, H₂O, CO₂.

12. Procédé selon la revendication 11, **caractérisé en ce que** les gaz d'échappement contiennent au moins 0,5 % en volume d'oxygène.
